# EUROPEAN PATENT APPLICATION

(11) **EP 4 814 553 A1**
(43) Date of publication of application: **30.09.2026**
(21) Application number: 25227180.4
(22) Date of filing: 24.12.2025
(51) Int. Cl.: G02B 6/44

(54) **AN OPTICAL FIBER ENCLOSURE HAVING A SELF-LOCKING SPLICE TRAY COVER**

(30) Priority: 28.03.2025 IN 202511030082
(71) Applicant: Sterlite Technologies Limited, Gurugram, Haryana 122102 (IN)
(72) Inventor: MORAZZONI, Stefano, 21040 Varese (IT); EL ALLAM, Sadek, 21040 Varese (IT); ZUCCARELLO, Sebastiano, 21040 Varese (IT)
(74) Representative: Valet Patent Services Limited

(57) **Abstract**

The present disclosure relates to optical fiber enclosure (100) for managing and protecting optical fibers comprising a support frame (102) and a stack of splice trays (104), where each splice tray in the stack is pivotably movable in an unlocked configuration and one or more enfolds (106) that are removably attached to the top of the stack of splice trays (104), with each enfold featuring restricting features (108). In particular, the stack contains multiple splice trays (104_{1....}104ₙ), arranged in parallel, allowing for efficient optical fiber management. The enclosure (100) also includes Further, restricting features (108) engage with the locking interface(110) between the support frame (102) and the top splice tray (104₁) in a locked configuration, thereby restricting the movement of the top splice tray (104₁) and subsequently locking the stack of splice trays (104) in place.

## Description

### TECHNICAL FIELD

Embodiments of the present disclosure relate to the field of telecommunication fiber, and more particularly, relates to an optical fiber enclosure enfold with multiple restricting features sitting between gaps of mounting frame and top splice tray in the locked configuration.

This application claims the benefit of Indian Application No. "202511030082" titled "AN OPTICAL FIBER ENCLOSURE HAVING A SELF-LOCKING SPLICE TRAY COVER" filed by the applicant on Mar 28, 2025, which is incorporated herein by reference in its entirety.

### Background Art

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information. In a typical cable arrangement, optical fibers are placed in a tubular assembly. A tube may be disposed inside an outer jacket or may form the outer jacket. In either case, the tube typically provides at least some level of protection for the fibers contained therein.

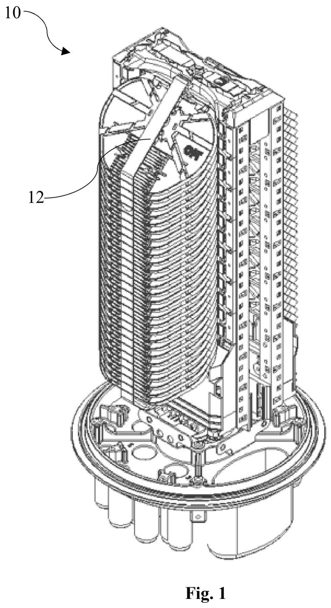

In the field of optical fiber enclosures, several methods have been developed to restrict the pivot movement of the stack of splice trays, each with its own set of challenges. One common approach involved in optical fiber enclosures (10) is the use of a Velcro strap (12), as shown in Fig. 1. While this method does secure the stack of splice tray, it is relatively complex due to the need for multiple components, including the Velcro strap (12), tightening mechanism of the strap and a separate cover. This adds to the overall complexity of the mechanism and can make the process cumbersome.

In some methods a cover on the top of the splice tray is there, which is then attached to a mounting bracket via a protruded notch. The mounting bracket has a hole to insert the protruded notch, effectively preventing the cover and splice tray from moving. However, this introduces challenges of its own. The method requires intricate manufacturing processes for the optical fiber enclosure (10), and the protruded notch can be prone to failure under the weight of the stack of splice trays. The single-point load exerted on the notch can lead to breakage, which undermines the reliability of the mechanism.

Prior art reference US20240219669A1 discloses fiber routing trays designed to route and terminate optical fibers within an enclosure. These trays are equipped with covers that protect the fibers, while still allowing the trays to perform a pivot movement.

Another prior art reference US8009954B2 discloses a cover that is pivotally mounted to the splice tray, providing controlled access to the interior regions of the splice tray. In these designs, Velcro straps are often employed to lock the splice trays in place. However, the use of Velcro straps introduces several drawbacks. The Velcro straps are not only expensive but also require a relatively complex process to access the splice trays. To gain access, operators must first remove the Velcro strap and then detach the cover mounted on top. This multi-step process significantly increases the time and effort required for simple maintenance tasks.

There are also some market-available splice tray covers that can restrict pivot movement. These covers, however, come with their own set of challenges such as requiring additional mounting elements integrated into the enclosure support frame, and in many cases, the use of specialized tools is necessary to open the cover. These added requirements further complicate the design and maintenance of the optical fiber enclosure, making the process less efficient and more prone to errors. The cumulative effect of these limitations points to the need for a more streamlined and cost-effective solution to restrict pivot movement in stack splice trays.

Therefore, conventional methods for securing splice trays exhibit several inherent drawbacks. Methods employing separate fastening components, such as Velcro straps, increasae complexity by requiring multiple parts -a strap, a tightening mechanism, and a separate cover-which complicates assembly and impedes quick access for maintenance. Designs utilizing a cover with a single protruding notch that engages a mounting bracket suffer from a critical reliability flaw. The single notch concentrates the mechanical load from the stack of splice trays at one point, making it susceptible to breakage or deformation under stress or over time, thereby jeopardizing the security of the entire tray stack. Other existing solutions often depend on additional, permanently installed hardware on the support frame or necessitate specialized tools for operation. This increases manufacturing cost and complexity while preventing rapid, tool-less access for field technicians.

Accordingly, to overcome the disadvantages of the prior art, there is an urgent need for a technical solution that overcomes the above-stated limitations in the prior arts by an optical fiber enclosure that can overcome the above disadvantages. Thus, the present disclosure proposes an optical fiber enclosure having a self-locking splice tray cover.

### SUMMARY OF THE DISCLOSURE

There remains an unmet need for a splice tray securing mechanism that is simple, reliable, and tool-less. An ideal solution would integrate protection and locking into a single robust component, eliminate separate fasteners, and avoid single-point load concentrations to ensure dependable performance and ease of use.

Embodiments of the present disclosure relates to an optical fiber enclosure for managing one or more optical fibers comprising a support frame, a stack of splice trays mounted on the support frame, the stack comprises one or more sets of splice trays such that each splice tray of the one or more sets of splice trays is pivotably movable in a predefined direction in an unlocked configuration and one or more enfolds removably attached on top of the stack of splice trays, and the one or more enfolds has one or more restricting features that sit in one or more gaps between the support frame and a top splice tray in a locked configuration, thereby restricting the movement of top splice tray and subsequently restricting the movement of remaining splice trays in the stack in the locked configuration. Further, the plurality of splice trays is substantially parallel to each other and at an angle between 0 to 2 degree from the splice tray operation plane in the locked configuration.

According to the first aspect of the present disclosure, the one or more enfolds restricts movement of the stack of splice trays such that angular movement of a top splice tray is between 0 to 2 degrees relative to the top splice tray position in a locked configuration.

According to the second aspect of the present disclosure, the one or more enfolds comprising a protecting portion that substantially covers a top splice tray in the locked configuration. In particular, the one or more restricting features and the protecting portion are connected via one or more extensions.

According to the third aspect of the present disclosure, the one or more extensions are at an angle of between 130 to 150 degrees with respect to the protecting portion. Further, each extension of the one or more extensions has exactly one restricting feature.

According to the fourth aspect of the present disclosure, at least a portion of the one or more enfolds has one or more edge walls that sits substantially parallel to walls of the top splice tray and at least partially covers the walls of the top splice tray in a locked configuration such that distance between the one or more edge walls and the closest wall of the top splice tray is between 0 to 1 mm.

According to the fifth aspect of the present disclosure, the one or more enfolds and the top splice tray have the same shape from one of a circular, oval, rectangular or any other known polygons. Further, each of the one or more enfolds comprises one or more locking features.

According to the sixth aspect of the present disclosure, the method of locking a stack of splice trays in an optical fiber enclosure comprises mounting a plurality of splice trays on a support frame in a stacked arrangement such that each splice tray of the plurality of splice trays is pivotably movable in a predefined direction in an unlocked configuration, removably installing one or more enfolds on a top splice tray of the plurality of splice trays such that angular movement of the top splice tray is restricted between 0 to 2 degrees, thereby restricting pivot movement of the stack of splice tray in a locked configuration.

According to the seventh aspect of the present disclosure, the one or more enfolds comprising: a protecting portion for covering the splicing region of the top splice tray; one or more extensions for connecting the protecting portion and one or more restricting features, where the one or more restricting features sit in the gap between the top splice tray and the support frame.

According to the eighth aspect of the present disclosure, the method of unlocking a stack of splice trays in an optical fiber enclosure comprises removing one or more enfolds by application of external force such that one or more restricting features of the one or more enfolds are removed from gaps between the support frame and a top splice tray, thereby allowing pivot movement of at least top splice tray of the stack of splice trays.

According to the ninth aspect of the present disclosure, the optical fiber enclosure covers the interior regions of the splice tray as well as restrict pivot movement of the splice trays, restrict pivot movement of a set of spice tray to effectively protect the splice tray by covering the splicing region as well as locking the movement of the stack of splice tray.

The foregoing objectives of the present disclosure are attained by providing an optical fiber cable with bundles of optical fibers.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating an optical fiber enclosure (100) in accordance with prior art of the present disclosure;
Fig. 2A is a pictorial snapshot illustrating a locked configuration of stack of splice tray(104) of an optical fiber enclosure(100) in accordance with an embodiment of the disclosure;
Fig. 2B is a pictorial snapshot illustrating a locked configuration of one or more stack of splice tray(104a, 104b) of an optical fiber enclosure (100) in accordance with an embodiment of the disclosure;
Fig. 3 is a pictorial snapshot illustrating an unlocked configuration of stack of splice tray(104) of an optical fiber enclosure (100) in accordance with an embodiment of the disclosure;
Fig. 4A is a pictorial snapshot illustrating one or more enfold (106) of the optical fiber enclosure(100) in accordance with an embodiment of the disclosure;
Fig. 4B is a pictorial snapshot illustrating a top view of the one or more enfold (106) of the optical fiber enclosure (100) in accordance with an embodiment of the disclosure;
Fig. 4C is a pictorial snapshot illustrating a side view of the one or more enfold (106) of the optical fiber enclosure (100) in accordance with an embodiment of the disclosure;
Fig. 4D is a pictorial snapshot illustrating an inside view of the one or more enfold (106) of the optical fiber enclosure (100) in accordance with another embodiment of the present disclosure.
Fig. 5 is a pictorial snapshot illustrating a side view of the one or more enfold (106) and stack of splice tray (104) mounted on the support frame (102) in accordance with another embodiment of the present disclosure.

The optical fiber enclosure is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features. Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

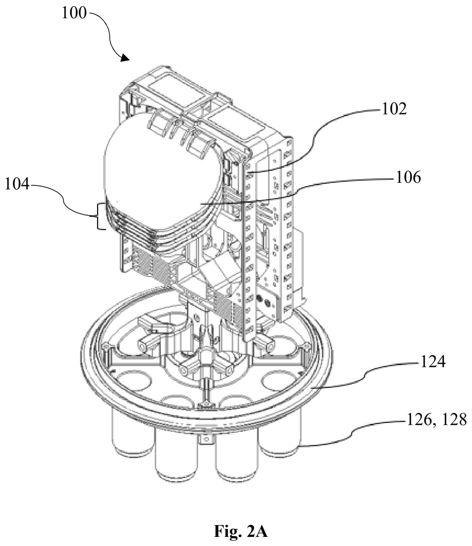

Fig. 2A is a pictorial snapshot illustrating a locked configuration of stack of splice tray(104) (hereinafter interchangeably referred as cassette)of an optical fiber enclosure (100).In particular, the optical fiber enclosure (100) comprises a support frame (102), a stack of splice tray (104),one or more enfold (106) (hereinafter interchangeably referred as splice tray cover), abase (124), a one or more inlet port (126) and a one or more outlet port (128).

In accordance with an embodiment of the present disclosure, the optical fiber enclosure (100) is a protective housing specifically designed to contain and safeguard fiber optic cables, optical fibers and their associated splices. In particular, the optical fiber enclosure (100) is suitable for both indoor and outdoor use, with the outdoor variant being weatherproof and equipped with watertight seals to prevent environmental damage. Moreover, the support frame (102), typically made of metal, serves as the structural backbone of the optical fiber enclosure (100), securely attaching to the base (124). Further, the support frame (102) provides the necessary support for holding the splice trays(104), one or more enfold (106), and other components within the optical fiber enclosure (100), ensuring that all parts remain properly aligned and fixed in place.

In accordance with an embodiment of the present disclosure, the support frame (102) is any type of support hardware, usually metal and attached to the base (124) of the optical fiber enclosure (100), used to hold, attach, mount, or secure the plurality of splice trays (104₁....104ₙ) and the one or more enfold (106) or any other part used in the optical fiber enclosure (100).

Within the optical fiber enclosure (100), the stack of splice trays (104) consists of the plurality of splice trays (104₁....104ₙ) arranged vertically in a stacked configuration. Alternatively, the plurality of splice trays (104₁....104ₙ) may be arranged horizontally in a stacked configuration. Further, the plurality of splice trays (104₁....104ₙ) are crucial for holding the optical fiber splices, keeping the connections organized, protected, and easily accessible. The plurality of splice trays (104₁....104ₙ) themselves are lightweight and compact, with various options available for splice holding chips and covers to secure the fibers in place.

In a locked configuration, the stack of splice trays (104) is securely fixed, restricting movement and preventing the trays from shifting accidentally. Particularly, the locked configuration minimizes the risk of damaging the optical fiber connections and ensures stability. Further, the angular movement of the plurality of splice trays (104₁....104ₙ) in this locked state is minimal, restricted to a maximum of 2 degrees due to the weight of the plurality of splice trays (104₁....104ₙ) and the rigidity of the overall structure.

The pivotal mounting of the stack of splice trays (104) on the support frame (102), for example via one or more pivot pins (130, 132), inherently creates a spatial separation or gap (110) between a portion of the stationary support frame (102) and an adjacent edge or surface of the top splice tray (1041) when the trays are in a generally horizontal, operational position. This gap (110) is a natural and pre-existing geometric consequence of the assembly and is present when the stack is in an unlocked configuration. The invention utilizes this pre-existing gap (110) as a locking interface, without requiring any modification to the standard support frame or splice trays.

In accordance with an embodiment of the present disclosure, the base (124) of the optical fiber enclosure (100) serves as the foundation, providing a stable platform for the support frame (102) and the stack of splice trays (104). In particular, the base (124) incorporates essential inlet ports (126) and outlet ports (128) for routing the fiber optic cables. Moreover, the inlet ports (126) are located beneath the base (124), allowing fibers to be inserted into the optical fiber enclosure (100), while the outlet ports (128) enable fibers to exit the optical fiber enclosure (100) safely and efficiently.

In accordance with an embodiment of the present disclosure, the optical fiber enclosure (100) comprises a protective cover (not shown) to protect all the elements mounted inside the optical fiber enclosure (100). Further, the protective cover adds an additional layer of protection, shielding the plurality of splice trays (104₁....104ₙ), support frame (102), ports (126, 128) and their contents from environmental contaminants such as dust and moisture. The protective cover may have a flat, dome or any shape.

In this configuration, the safe and organized management of fiber optic cables and optical fibers is ensured. In particular, the locked configuration of the plurality of splice trays (104₁....104ₙ) guarantees that the optical fiber splices remain securely in place, while the base (124) and support frame (102) provide the necessary structural integrity. With the inlet port (126) and outlet ports (128) offering organized entry and exit points for the fiber optic cables. Further, the optical fiber enclosure (100) maintains both accessibility and protection. The minimal angular movement of the stack of splice trays (104) in locked configuration ensures that any unintentional structural changes do not disrupt the optical fiber connections, preserving the integrity of the entire system.

In accordance with an embodiment of the present disclosure, the locking mechanism of the optical fiber enclosure (100) is designed to secure the stack of splice trays (104) in a fixed position, ensuring that they remain stable and prevent any unintended movements. In the locked configuration of the stack of splice trays (104), the plurality of splice trays (104₁....104ₙ) are positioned in a stacked arrangement, one over another, and are securely fastened to the support frame (102) and where the support frame (102) is mounted over the base (124) of the optical fiber enclosure (100). In particular, this arrangement limits the angular movement of the stack of splice trays (104) to a maximum of 2 degrees, primarily due to the inherent weight of the stack of splice trays (104) and any minor unintentional structural changes. Further, the locked configuration ensures that the stack of splice trays (104) are not accessible or movable, providing protection to the fiber optic splices and preventing any accidental disruptions or damages to the optical fibers inside the plurality of splice trays (104₁....104ₙ).

In accordance with an embodiment of the present disclosure, the locking mechanism also serves to maintain the integrity of the system, ensuring that the fiber optic cables and splices are safely housed within the optical fiber enclosure (100). Particularly, the plurality of splice trays (104₁....104ₙ) are attached into place on the support frame (102) with the help of one or pivot pins, and the support frame (102) is firmly attached to the base (124) of the optical fiber enclosure (100). This attachment creates a secure foundation, making it impossible for the stack of splice trays (104) to shift or move freely. Further, the lock ensures that the stack of splice trays (104) remain in their designated position, maintaining the organization and safety of the fiber optic network.

In accordance with an embodiment of the present disclosure, the base (124) of the optical fiber enclosure (100) plays a crucial role in the locking mechanism by providing a stable platform for the attachment of the support frame (102) and locking the stack of splice trays (104) in the desired place. This also includes the routing of optical fibers and optical fiber cables through inlet ports (126) and outlet ports (128), which are positioned on the base (124) for efficient cable management. Further, the locking of the stack of splice trays (104) in desired place prevents any movement that could affect the routing and performance of the optical fibers and optical fiber cables, keeping the entire system secure and organized.

In accordance with an embodiment of the present disclosure, locking mechanism (as shown in Fig. 2A) of the optical fiber enclosure (100) ensures that the stack of splice trays (104) remains in a fixed, secure configuration, minimizing any risks associated with movement or accidental dislodging of the plurality of splice trays (104₁....104ₙ) to provide a reliable and protective environment for the optical fiber connections, both during installation and throughout the operational life of the system.

Further, the optical fiber is a flexible glass material consisting of core & cladding which is used for transmission of light rays on the principle of total internal reflection. The glass material of the optical fiber is surrounded by one or more protective coating layers.

In accordance with an embodiment of the present disclosure, the optical fiber enclosure (100) is used to protect stripped fiber optic cable and fiber optic splices from the outside environment, and they are available for indoors as well as outdoor mounting. The optical fiber enclosure (100) mounted outdoors is usually weatherproof with watertight seals.

In accordance with an embodiment of the present disclosure, the plurality of splice trays (104₁....104ₙ) are designed to hold individual or mass fusion spliced optical fibers. The plurality of splice trays (104₁....104ₙ) are typically installed within the optical fiber enclosure (100) and patch panels. They are compact, lightweight, and available with a variety of splice holding chips and cover options. The plurality of splice trays (104₁....104ₙ)may be used to place redundant bare fiber during optical cable splicing (commonly known as splicing).

Further, the shape and design of the support frame (102) are adaptable and can vary based on specific requirements or the configuration of the optical fiber enclosure (100). It can be customized to accommodate different sizes, shapes, and types of optical components, ensuring flexibility and compatibility with various shapes of the optical fiber enclosure (100). Whether it's a simple rectangular frame or a more complex design tailored to fit particular components.

In accordance with an embodiment of the present disclosure, one or more enfolds (106) and the top splice tray (104₁) have the same shape including but not limited to a circular, oval, rectangular or any other polygon. The one or more enfolds (106) shields the top splice tray (104₁) from accidental access and protects the optical fiber splices from damage.

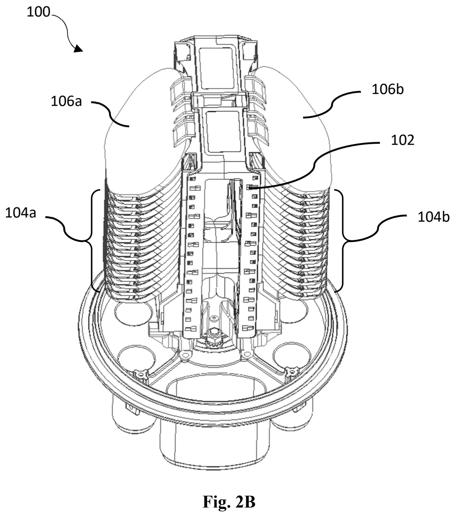

Fig. 2B is a pictorial snapshot illustrating a locked configuration of one or more stacks of splice tray(104a, 104b) of an optical fiber enclosure (100) similar to the optical fiber enclosure (100) of Fig. 2A. In particular, the optical fiber enclosure (100) comprises two sets of stacks of splice tray i.e., a first set of splice trays (104a) stacked together on a first side of the support frame (102) and a second set of splice trays (104b) stacked together on a second side of the support frame (102), a first enfold (106a) and a second enfold (106b) corresponding to each first and second set of splice trays (104a, 104b). Further, the stack of splice trays (104) may include more than two sets of splice trays which may be arranged at different positions of the support frame (102) in a stacked fashion.

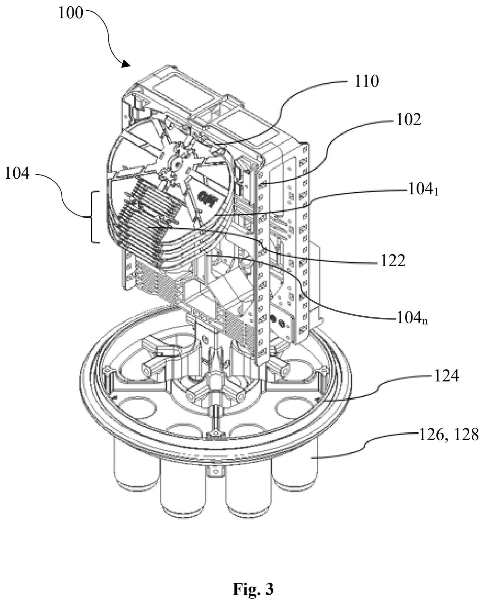

Fig. 3 is a pictorial snapshot illustrating an unlocked configuration of stack of splice trays(104) of the optical fiber enclosure (100) in accordance with an embodiment of the present disclosure. In particular, the optical fiber enclosure (100) comprises the support frame (102), the stack of splice tray (104), the top splice tray (104₁), a locking interface (110) between the splice trays (104) and support frame (102), the base (124), the one or more inlet port (126) and the one or more outlet port (128). In particular, the splice trays (104) comprises a splicing region (122). In the unlocked configuration of the stack of splice trays (104),movement of the stack of splice trays(104) is possible, and the plurality of splice trays (104₁....104ₙ) can be accessed. Moreover, the splicing region (122) on the plurality of splice trays (104₁....104ₙ), where the spliced portion of the optical fiber is placed inside a sleeve in a protective manner. Further, splicing of optical fiber, the optical fiber inside two different optical fiber cables is spliced together within a protective housing which is an optical fiber enclosure (100) as disclosed in the present disclosure. Most commonly, fusion splicing is used, where the optical fiber ends are melted together using a high-precision laser to create a permanent connection.

In accordance with an embodiment of the present disclosure, the one or more enfolds (106) restricts movement of the stack of splice trays (104) such that angular movement of a top splice tray (104₁) is up to 3 degrees in position in a locked configuration.

Further, removing the one or more enfold (106) by application of external force: The locking features can be unlocked by simply moving the one or more enfold (106) in an upward direction with the help of an external force. Once the one or more enfold (106) are removed from the locking interface (110), the stack of splice trays (104) are unlocked for movement which enables access to each splice trays (104₁....104ₙ) of the stack of splice trays (104).

In accordance with an embodiment of the present disclosure, a method of unlocking a stack of splice trays (104) in an optical fiber enclosure (100) comprises steps of removing one or more enfolds (106) by application of external upward force of between 1 to 10N such that one or more restricting features (108) of the one or more enfolds (106) are removed from the locking interface (110) between the support frame (102) and a top splice tray (104₁), thereby allowing pivot movement of at least top splice tray (104₁) of the stack of splice trays (104).

Further, the method of locking a stack of splice trays (104) in the optical fiber enclosure (100)comprises steps of mounting a plurality of splice trays (104₁.....104ₙ) on a support frame (102) in a stacked arrangement such that each splice tray of the plurality of splice trays (104₁.....104ₙ) is pivotably movable in a predefined direction in an unlocked configuration, removably installing one or more enfolds (106) on a top splice tray (104₁) of the plurality of splice trays (104₁.....104ₙ) such that angular movement of the top splice tray (104₁) is restricted between 0 to 2 degrees, thereby restricting pivot movement of the stack of splice tray (104) in a locked configuration.

In accordance with an embodiment of the present disclosure, the one or more restricting features (108) are protruded notches with a trapezoidal cross-section that interlock with the locking interface (110).

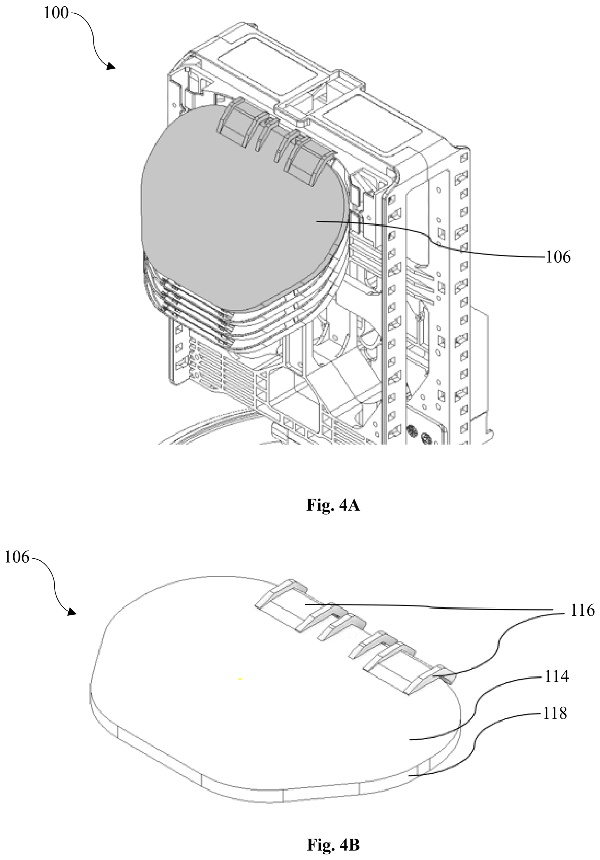

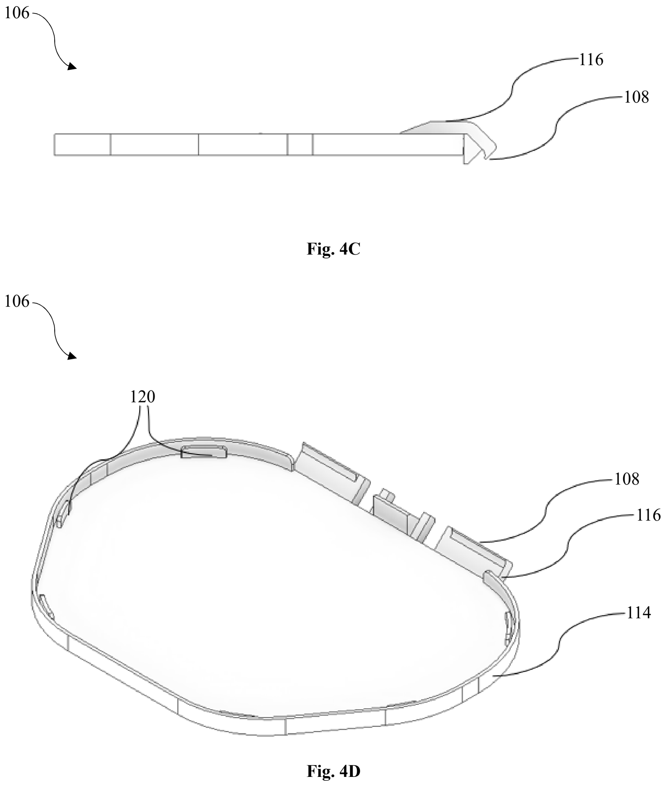

Fig. 4A, Fig. 4B, Fig. 4C and Fig. 4D are pictorial snapshots illustrating a top view, a side view and an inside view respectively of one of the one or more enfolds (106) of the optical fiber enclosure (100). In particular, the one of the one or more enfold (106) is a protective cover that is placed over the top of the stack of splice trays (104), and it plays a crucial role in securing and protecting the fiber optic splices inside the enclosure (100). Moreover, the one of the one or more enfold (106) is designed to shield the splicing region (122)of the splice tray from external environmental factors, ensuring that the spliced optical fibers remain safe and protected. Further, the one of the one or more enfold (106) features a protecting portion (114), which covers the splicing region (122), keeping it shielded from dust, moisture, and other potential contaminants.

In addition to the protecting portion (114), the one of the one or more enfold (106) also incorporates one or more restricting features (108). In particular, the restricting features (108) are strategically placed between the locking interface (110) of the top splice tray (104₁) and the support frame (102) of the enclosure (100). Moreover, the primary function is to lock the movement of the stack of splice trays (104), preventing any unwanted shifting or displacement when the one of the one or more enfold (106) is placed in position. Further, this locking mechanism ensures that the stack of splice trays (104) remain stable and secure within the enclosure (100).

In accordance with an embodiment of the present disclosure, at least a portion of the one or more enfolds (106) comprises one or more edge walls (118) that sits substantially parallel to walls of the top splice tray (104₁) and at least partially covers the walls of the top splice tray (104₁) in a locked configuration such that distance between the one or more edge walls (118) and the closest wall of the top splice tray (104₁) is between 0 to 1 mm. Further, the edge walls (118) of the one of the one or more enfold (106) enhance the protection of the fiber optic connections and provide a complete enclosure around the top splice tray (104₁).

In accordance with another embodiment of the present disclosure, the shape of the one of the one or more enfold (106) mirrors the shape of the top splice tray (104₁), ensuring that the top splice tray (104₁) is completely covered for optimal protection.

Further, the restricting feature (108) is provided on the one or more extension (116). By the way of a non-limiting example,the one or more extension (116) has one continuous restricting feature (108). By the way of another non-limiting example, each one of the one or more extensions (116) has separate restricting features (108). By the way of yet another non-limiting example, each one of the one or more extensions (116) has multiple restricting features (108).

In accordance with an embodiment of the present disclosure, the one or more enfold (106) is configured to be removed by applying an upward external force, disengaging the one or more restricting features (108) from the locking interface (110) and unlocking the stack of splice trays (104).

Referring to Fig. 4B, the enfold structure may be seen, highlighting the protecting portion (114) and one or more extensions (116), which protrude from the one of the one or more enfold (106).

The side view illustrated in Fig.4C shows how the restricting features (108) and extensions (116) interact with the support frame (102) and the top splice tray (104₁). Further, the restricting features (108) sit in the locking interface (110) between the support frame (102) and the top splice tray (104₁), locking them into place and preventing any movement of the stack of splice trays (104) when the one of the one or more enfold (106) is in position.

In Fig. 4D, the internal structure of the one or more enfold (106) illustrates one or more enfold (106) comprises the protecting portion (114), the one or more extensions (116), and the one or more locking features (120). In particular, the locking features (120) play a critical role in sealing the top splice tray (104₁) by contacting the top splice tray (104₁) and ensuring that the one of the one or more enfold (106) is securely fastened. Further, results in a complete seal, which prevents outside access to the top splice tray (104₁) and ensures the integrity of the fiber optic connections.

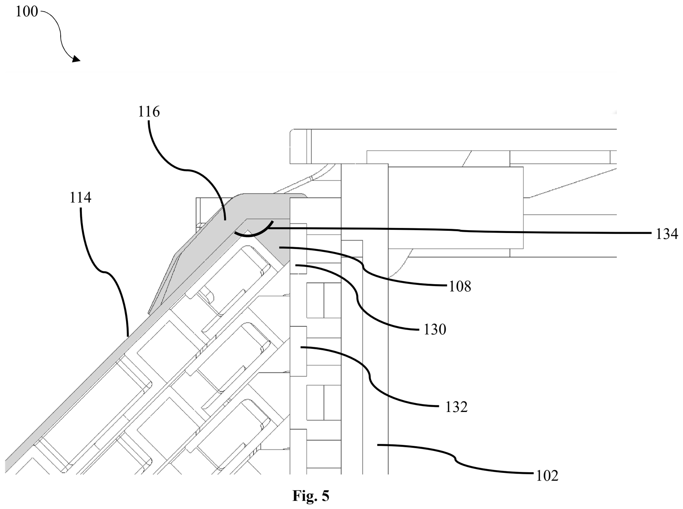

Fig. 5 illustrates the angle between the protecting portion (114) and the one or more extensions (116) is approximately 135 degrees with respect to the protecting portion (114), forming an angle (134) between 130 to 150 degrees ensuring that the one of the one or more enfold (106) securely fits over the splice tray (104) and provides a stable, protective cover.

Further in Fig. 5 there is illustrated a side view of the one or more enfold (106) and stack of splice trays(104) mounted on a support frame (102). In particular, the support frame (102) includes one or more pivot pins (130, 132) that are strategically placed to mount the stack of splice trays (104). In particular, the one or more pivot pins (130, 132) are essential components that allow the stack of splice trays (104) to move with controlled rotational movement. Moreover, pivot pins (130, 132) provide the mechanism for allowing the stack of splice trays (104) to rotate around a fixed point, enabling upward and downward movement of the stack of splice trays (104) in a pivotable fashion. Further, the stack of splice trays (104) is designed to rotate 180 degrees up and down, giving the stack of splice trays (104) flexibility to pivot in either direction. The pivoting motion is particularly useful when accessing the stack of splice trays (104) for maintenance, splicing, or inspection, as it allows the technician to adjust the stack of splice trays (104) for easier handling or to view the splicing region (122) more conveniently.

The allows for unrestricted vertical movement of the stack of splice trays (104) in certain configurations, where the stack of splice trays (104) are free to pivot upwards and downwards without any additional restrictions, making it easier to access the fiber optic connections inside the plurality of splice trays (104₁....104ₙ). In cases where there are no other design constraints, this pivot movement gives users the ability to fully rotate the stack of splice trays (104), which could be particularly helpful for more efficient cable and optical fiber management and maintenance tasks.

In accordance with an embodiment of the present disclosure, the stack of splice trays (104) is also capable of horizontal pivot movement (left and right), enhancing the flexibility and accessibility of the plurality of splice trays (104₁....104ₙ). In particular, the horizontal pivoting allows the plurality of splice trays (104₁....104ₙ) to move laterally, which can be especially beneficial when the plurality of splice trays (104₁....104ₙ) are stacked together. Moreover, the movement would enable users to shift a top splice tray (104₁) out of the stack of splice trays (104) or adjust the alignment of plurality of splice trays (104₁....104ₙ) to improve access or workflow. Further, the extension (116) of the one or more enfold (106), in this context, contributes to the overall structure by maintaining the optical fiber enclosure (100) integrity while the plurality of splice trays (104₁....104ₙ) are pivoting. Furthermore, the protecting portion (114) of the one or more enfolds (106) helps shield the spliced fibers from the external environment, ensuring that the pivoting action does not disrupt or expose the sensitive splicing region (122).

In accordance with an embodiment of the present disclosure, the plurality of splice trays (104₁....104ₙ) rotates around the one or more pivot pins (132) between an unlocked configuration and a locked configuration. Further, each splice tray of the stack of splice trays (104) is removably mounted on the support frame (102).

In accordance with an embodiment of the present disclosure, the one or more enfold (106) prevents the plurality of splice trays (104₁....104ₙ) from dust, dirt, debris or other foreign materials.

In accordance with an embodiment of the present disclosure, installing and locking one or more pivotably rotatable the stack of splice trays (104) inside an optical fiber enclosure (100), the method comprises steps of mounting a support frame (102) over the optical fiber enclosure base (124); attaching plurality of splice trays (104₁....104ₙ) over the support frame (102) using one or more pivot pins (130, 132); rotating the plurality of splice trays (104₁....104ₙ) downward over the one more pivot pins (130, 132) and attaching the one or more enfold (106) over a top splice tray (104₁) of the plurality of splice trays (104₁....104ₙ) to interlock the one or more restricting features (108) and the plurality of splice trays (104₁....104ₙ) with the one or more pivot pins (130, 132). Further, the one or more stack of splice trays (104a, 104b) are pivotably rotatable by 180 degrees up and down. Furthermore, the plurality of splice trays (104₁....104ₙ) are removably mounted over the support frame (102) in a stack configuration.

In accordance with an embodiment of the present disclosure, the one or more restricting features (108) fills one or more locking interface (110) between the plurality of splice trays (104₁....104ₙ) and the support frame (102) to lock the movement of the stack of splice trays (104).

The optical fiber enclosure (100) with its self-locking splice tray cover (106), one or more embodiments, may deliver significant technical improvements over prior solutions by integrating, in a single unitary component, the dual functions of splice protection and stack latching, thereby reducing part count and simplifying assembly. Its design - preferably employing multiple spaced restricting features (108) - distributes mechanical load across the support frame (102), eliminating the single-point failure risk inherent in prior single-notch designs and enhancing long-term reliability. Furthermore, the mechanism operates entirely without tools, enabling instant locking upon placement and quick unlocking via direct upward force, which streamlines field maintenance. Finally, the cover is amenable to cost-effective single-piece manufacturing, such as injection molding, eliminating the need for and cost of separate fasteners or complex hardware. Together, these advantages provide a robust, user-friendly, and economically superior solution for securing optical fiber splice trays.

While various aspects of the present disclosure have been illustrated and described, it will be clear that the present disclosure is not limited to these aspects only. Numerous modifications, changes, variations, substitutions, and equivalents will be apparent to those skilled in the art, without departing from the spirit and scope of the present disclosure, as described in the claims. Further, unless stated otherwise, terms such as "first" and "second" are used to arbitrarily distinguish between the elements such terms describe. Thus, these terms are not necessarily intended to indicate temporal or other prioritization of such elements.

## Claims

1. An optical fiber enclosure (100) for managing optical fibers, comprising:
a support frame (102);
a stack of splice trays (104) pivotally mounted on the support frame (102), the stack comprising a top splice tray (1041); and
a cover (106) removably attachable over the top splice tray (1041), **characterized in that** the cover (106) comprises at least one integral restricting feature (108) which, when the cover (106) is attached, extends into a gap (110) defined between the support frame (102) and the top splice tray (1041) so as to restrict pivotal movement of the top splice tray (104₁) and thereby lock the stack of splice trays (104) against pivotal movement.

2. The optical fiber as claimed in claim 1, wherein the one or more enfolds (106) further comprises a protecting portion (114) shielding a splicing region (122) of a top splice tray (104₁) in the locked configuration.

3. The optical fiber as claimed in claim 1, wherein the one or more enfolds (106) further comprising one or more extensions (116) connecting the protecting portion (114) to the one or more restricting features (108).

4. The optical fiber as claimed in claim 1, wherein the one or more extensions (116) are angled between 130-150 degrees relative to the protecting portion (114).

5. The optical fiber as claimed in claim 1, wherein the one or more enfolds (106) further comprising one or more edge walls (118) that are disposed substantially perpendicular to the top splice tray (104₁) such that distance between the one or more edge walls (118) and the closest wall of the top splice tray (104₁) is between 0 to 1 mm in the locked configuration.

6. The optical fiber as claimed in claim 1, wherein the one or more enfolds (106) restricts movement of the stack of splice trays (104) such that angular movement of a top splice tray (104₁)is up to 3 degrees in position in a locked configuration.

7. The optical fiber as claimed in claim 1, wherein the one or more restricting features (108) and the protecting portion (114) are connected via one or more extensions (116).

8. The optical fiber enclosure as claimed in claim 1, wherein the one or more enfold (106) is shaped to match the top splice tray (104₁).

9. The optical fiber enclosure as claimed in claim 1, wherein the one or more enfold (106) is configured to be removed by applying an upward external force, disengaging the one or more restricting features (108) from the locking interface (110) and unlocking the stack of splice trays (104).

10. The optical fiber enclosure as claimed in claim 1, wherein the one or more restricting features (108) are protruded notches with a trapezoidal cross-section that interlock with the locking interface (110).

11. A method of locking a stack of pivotally mounted splice trays (104) in an optical fiber enclosure (100), comprising:
providing a stack of splice trays (104) pivotally mounted on a support frame (102), thereby defining a gap (110) between the support frame (102) and a top splice tray (1041) of the stack;
placing a cover (106) over the top splice tray (1041); and
**characterized by** engaging at least one integral restricting feature (108) of the cover (106) into the gap (110) between the support frame (102) and the top splice tray (1041) by said placing, thereby restricting pivotal movement of the top splice tray (1041) and locking the entire stack against pivotal movement.

12. The optical fiber as claimed in claim 1, wherein the one or more enfolds comprising:
a protecting portion for covering the splicing region (122) of the top splice tray (104₁);
one or more extensions (116) for connecting the protecting portion (114); and
one or more restricting features (108) sitting in the gap between the top splice tray (104₁) and the support frame (102).

13. A method of unlocking a stack of splice trays (104) in an optical fiber enclosure (100), **characterized in that** steps of:
removing one or more enfolds (106) by application of external upward force of between 1 to 10 N such that one or more restricting features (108) of the one or more enfolds (106) are removed from the locking interface(110) between the support frame (102) and a top splice tray (104₁), thereby allowing pivot movement of at least top splice tray (104₁) of the stack of splice trays (104).

14. The method as claimed in claim 13, wherein the one or more enfolds (106) comprising one or more edge walls (118) that are disposed substantially perpendicular to the top splice tray (104₁) such that distance between the one or more edge walls (118) and the closest wall of the top splice tray (104₁) is between 0 to 1 mm in the locked configuration.

15. The method as claimed in claim 13, wherein the one or more enfolds (106) further comprises a protecting portion (114) shielding a splicing region (122) of a top splice tray (104₁) in the locked configuration and one or more extensions (116) connecting the protecting portion (114) to the one or more restricting features (108).
